(19) Europäisches Patentamt / European Patent Office / Office européen des brevets

(11) **EP 4 757 192 A1**

(12) **EUROPEAN PATENT APPLICATION**

(43) Date of publication:
**10.06.2026 Bulletin 2026/24**

(21) Application number: **24217262.5**

(22) Date of filing: **03.12.2024**

(51) International Patent Classification (IPC):
*H04B 1/69* $^{(2011.01)}$ *H04B 1/717* $^{(2011.01)}$
*H03B 23/00* $^{(2006.01)}$ *H04B 1/7163* $^{(2011.01)}$

(52) Cooperative Patent Classification (CPC):
**H04B 1/7172; H04B 1/71635; H04B 2001/6912**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Semtech Corporation Camarillo CA 93012-8790 (US)**

(72) Inventors:
- **Devaucelle, Christophe Jean Jacques 2043 Boudevilliers (CH)**
- **Seller, Olivier Bernard André 17220 Sainte-Soulle (FR)**
- **Petitpied, Titouan Jean 2000 Neuchâtel (CH)**

(74) Representative: **P&TS SA (AG, Ltd.)**
**Avenue J.-J. Rousseau 4**
**P.O. Box 2848**
**2001 Neuchâtel (CH)**

(54) **DIGITAL RADIO TRANSMITTER AND DATA TRANSMISSION METHOD**

(57) A chirp-based spread spectrum digital radio transmitter configured to suppress or attenuate discontinuities in the chirp frequency profile with an interpolation or smoothing procedure. The interpolation reduces significantly out-of-band emissions and does not affect the demodulation and decoding. In the case of a LoRa communication, the inventive transmitter has low constellation error and can communicate with legacy unmodified receivers. The process does not introduce unwanted phase shifts and can be used to control the signal's phase, also on continuous segments of the chirp to insert an arbitrary phase shift.

Fig. 4

EP 4 757 192 A1

## Description

### Technical domain

The present invention concerns a digital radio transmitter suitable for low-power wireless networks using spread-spectrum chirpmodulated signals, and the corresponding transmission and modulation method.

### Related art

Wireless connected devices have been the object of considerable interest and effort in recent times. Improved wireless communication techniques are instrumental for the creation and the development of the "Internet of Things". In this context, several wireless communication protocols have been proposed and utilised. The LoRa™ communication system, known among others by patents EP 2449690 B1, EP 2763321 B1, EP 2767847 B1, EP 3247046 B1, and EP 2449690 B1, uses chirp spread-spectrum modulation to achieve long transmission ranges with low complexity and little power expenditure.

In the context of this disclosure, the wording "LoRa" indicates for brevity a communication system based on the exchange of radio signals that include a plurality of frequency chirps, each chirp being limited to a finite interval of time and a finite bandwidth, wherein the chirps include base chirps in which the instantaneous frequencies follow a given function from the beginning to the end of the interval of time, and modulated chirps that are the result of cyclic shifts of the base chirp. The shift value codes for a symbol taken in a modulation alphabet. This definition includes the known LoRa™ products and standards as well as other forms of chirp modulation sharing the same foundations, comprising possible and yet unimplemented variants of the broad concept.

Signals containing series of many frequency chirps exhibit sudden frequency jumps at boundaries between chirps and inside chirps that are modulated with a cyclic shift (like in LoRa), when the frequency wraps between the minimum and maximum admissible frequency values. Such frequency jumps generate out-of-band emissions which might go beyond regulatory limits.

Band-pass or low-pass filters in the time domain-i.e. on the signal itself-are used classically to suppress out-of-band emissions. This is not a satisfying solution, however, as it modifies both phase and amplitude of the signal, removing the constant-envelope property. Also, filtering comes with a non-negligeable computational cost.

### Short disclosure of the invention

An aim of the present invention is the provision of a transmitter and a communication method based on chirp spread-spectrum modulation overcoming at least some of the shortcomings and limitations of the state of the art.

According to the invention, these aims are attained by the object of the attached claims, and especially by a digital radio transmitter configured for encoding digital data into a series of variable-frequency chirps, modulating a carrier on the basis of the series of variable-frequency chirps, transmitting the carrier as radio signal, characterized by being configured to locate one or more interpolation segments in the series of variable-frequency chirps, modify the series of variable-frequency chirps by replacing values of the instantaneous frequency of the series of variable-frequency chirps in each interpolation segment with modified values resulting from an interpolation of values of the instantaneous frequency, modulating the carrier with the modified series of variable-frequency chirps.

Advantageously, the interpolation segments may enclose a discontinuity in the instantaneous frequency of the series of variable-frequency chirps and, through the interpolation, the discontinuity is eliminated or at least replaced by one or more smaller steps or discontinuities. In this way, the transmitter reduces the out-of-band emissions.

The interpolation may interpose a linear segment, or a piecewise linear function, or a polynomial function, or an exponential rational function, or a cosine function, or a hyperbolic function; however, the list is not complete. Many mathematical functions can be used in the frame of the invention, and it would be impossible to enumerate them.

Preferably, the interpolation is confined into a finite number of compact interpolation segments, and the frequency profile outside the segments is not modified. The interpolation segments may have a common predetermined width, or else the width of the interpolation segment may be changed adaptively, based on the height of an enclosed discontinuous step, or on the slope of the chirp, or on any other useful parameter.

Advantageously, the interpolation does not introduce unwanted phase shift. Each interpolation in a segment may produce zero net phase shift, or introduce a desired phase shift, positive or negative.

The goals of the invention are also achieved by the processing methods of the corresponding claims.

In the context of this disclosure, "interpolation" indicates a mathematic procedure to determine values between two points having a known value. In the context of a time series of sampled values, the interpolation may lead to the determination of one or more sample values between two known samples. The (continuous or discrete) times of the known values may be regarded as the left and right boundaries of an "interpolation segment".

A possible variant concerns a method of transmitting digital data and the corresponding transmitter. The method comprises encoding the data into a series of variable-frequency chirps, modulating a carrier with the series of variable-frequency chirps, transmitting the carrier as radio signal, receiving the radio signal in a receiver, reconstructing the digital data based on the received radio signal and especially, in the transmitter, a step of smoothing the variable-frequency chirp by applying a low-pass filter to values of the instantaneous frequency or of the instantaneous phase of the of the signal, modulating the carrier with the modified series of variable-frequency chirps.

Advantageously, the low-pass filter may be a digital first-order IIR (iterative) digital filter, but other solutions are possible, such as a higher- order filter, or a FIR low-pass filter. It may be applied to the whole of the chirp profile, or only to selected segments.

## Short description of the drawings

Exemplar embodiments of the invention are disclosed in the description and illustrated by the drawings in which:

Figure 1 shows, in schematic simplified fashion, the structure of a radio modem according to one aspect of the present invention.

Figure 2a plots the instantaneous frequency of a base chirp and of a modulated chirp according to one aspect of the invention. The phase of the same signals is represented in Figure 2b, and Figure 2c plots the real and of the imaginary component of the base chirp and of a modulated chirp, in the time domain, and in the baseband representation.

Figure 3 shows a plot of the instantaneous frequency of a chirp signal with step discontinuities and an interpolated continuous version of the same.

Figure 4 shows a different interpolation process that adapts the interpolation width to the step height.

Figures 5a and 5b show the effect of the interpolation on the signal phase that results unchanged in figure 5a and advanced in figure 5b.

Figure 6 shows an example of partial interpolation

Figure 7 shows that the interpolation in the frequency domain can be used to introduce a phase shift in an arbitrary segment of the chirp profile.

Figure 8 Shows the results of a comparative test between signals with and without interpolation. The spectra display the improving effect of the invention on the out-of-band emissions. The numbers given in the legend correspond to the EVM of the modified LoRa signal.

In the figures, remarkable elements are identified by reference signs that are repeated in the text. The same reference sign may be used to identify distinct elements that are identical, similar, logically related, or technically equivalent. When many identical, similar, related or equivalent elements occur on a drawing, some reference signs may have been omitted to avoid cluttering the figure.

## Examples of embodiments of the present invention

The patents mentioned in the "related art" section above, for example EP 2449690 B1, EP 2763321 B1 and EP 3247046 B1 disclose the base principles of a form of chirp-modulation. They will be recalled here summarily.

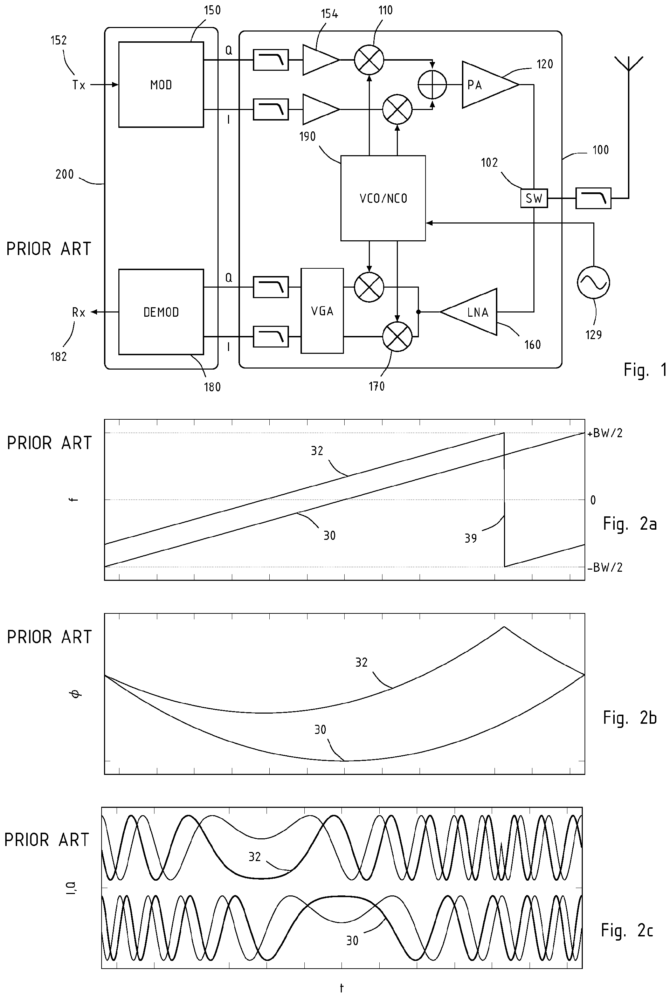

The radio transceiver that is schematically represented in **Figure 1** is a possible embodiment of the invention. The transceiver includes a baseband section 200 and a radiofrequency section 100. It includes a baseband modulator 150 that generates a baseband complex signal based on the digital data 152 at its input. This is then converted to the desired transmission frequency by the RF section 100, amplified by the power amplifier 120, and transmitted by the antenna through the RF Switch 102.

Once the signal is received on the other end of the radio link, it is processed by the receiving part of the transceiver of Figure 1 that comprises a low noise amplifier 160 followed to a down-conversion stage 170 that generates a baseband signal (which is again a complex signal represented, for example by two components $I$, $Q$ comprising a series of chirps, then treated by the baseband processor 180, whose function is the reverse of that of the modulator 150, and provides a reconstructed digital signal 182.

As discussed in EP2449690, the signal to be processed comprises a series of chirps whose frequency changes, along a predetermined time interval, from an initial instantaneous value $f_0$ to a final instantaneous frequency $f_1$. It will be assumed, to simplify the description, that all the chirps have the same duration T, although this is not an absolute requirement for the invention.

The chirps in the baseband signal can be described by the time profile $f(t)$ of their instantaneous frequency or also by the function $\phi(t)$ defining the phase of the signal as a function of the time. Importantly, the processor 180 is arranged to process and recognize chirps having a plurality of different profiles, each corresponding to a symbol in a predetermined modulation alphabet.

According to an important feature of the invention, the received or transmitted signal can comprise base chirps (also called unmodulated chirps in the following) that have specific and predefined frequency profile, or one out of a set of possible modulated chirps, obtained from base chirps by time-shifting cyclically the base frequency profile. **Figures 2a and 2b** illustrate, by way of example, possible frequency and phase profiles of a base chirp 30 and of one modulated chirp 32 between the time instant $t = t_0$ at the beginning of a chirp and the instant $t = t_1$ at the end of the chirp, while **figure 2c** shows the corresponding baseband signals in the domain of time. The horizontal range corresponds for example to a symbol and, although the plots are drawn as continuous, they in fact represent a finite number of discrete samples, in a concrete implementation. As to the vertical ranges, they are normalized to the intended bandwidth or to the corresponding phase or amplitude span.

The modulated chirp 32 exhibits a step discontinuity 39 where the frequency changes suddenly from the maximum possible value BW/2 to the minimum possible value -BW/2. Even if it is not easily visible in the figure, the unmodulated chirp 30 exhibits a similar discontinuity at the boundaries of the plot.

The phase is represented in figure 2b as if it were an unbounded variable, but it may in fact span across several revolutions in a concrete implementation.

In the example depicted, the frequency of a base chirp increases linearly from an initial value - BW/2 to a final value BW/2 where BW denotes the bandwidth spreading, but down-chirps or other chirp profiles are also possible. Thus, the information is encoded in the form of chirps that have one out of a plurality of possible cyclic shifts with respect to a predetermined base chirp, each cyclic shift corresponding to a possible modulation symbol or, otherwise said, the processor 180 needs to process a signal that comprises a plurality of frequency chirps that are cyclically timeshifted replicas of a base chirp profile, and extract a message that is encoded in the succession of said time-shifts.

The signal may include also conjugate chirps that are complex conjugate of the base unmodulated chirp. One can regard these as down-chirps, in which the frequency falls from BW/2 to - BW/2.

The operation of evaluating a time shift of a received chirp with respect to a local time reference may be referred to in the following as "dechirping" and can be carried out advantageously by a de-spreading step that involves multiplying the received chirp by a complex conjugate of a locally generated base chirp, sample by sample. This produces an oscillating digital signal whose main frequency can be shown to be proportional to the cyclic shift of the received chirp. The demodulation may involve then a Fourier transform of the de-spread signal. The position of the Fourier component with maximum magnitude is a measure of the cyclic shift and of the modulation value. In mathematical terms, denoting the k-th received symbol with $S_j^k$, the corresponding modulation value is given by $m(k) = \arg\max_n (|X(k, n)|)$ where $X(n, k) = \mathcal{F}\left(S_j^k \cdot \bar{b}_j\right)$ denotes the Fourier transform of the product between $S_j^k$ and the conjugate of a base chirp $\bar{b}_j$. Other manners of demodulating the signal and extracting the cyclic shift of each symbol are possible, however.

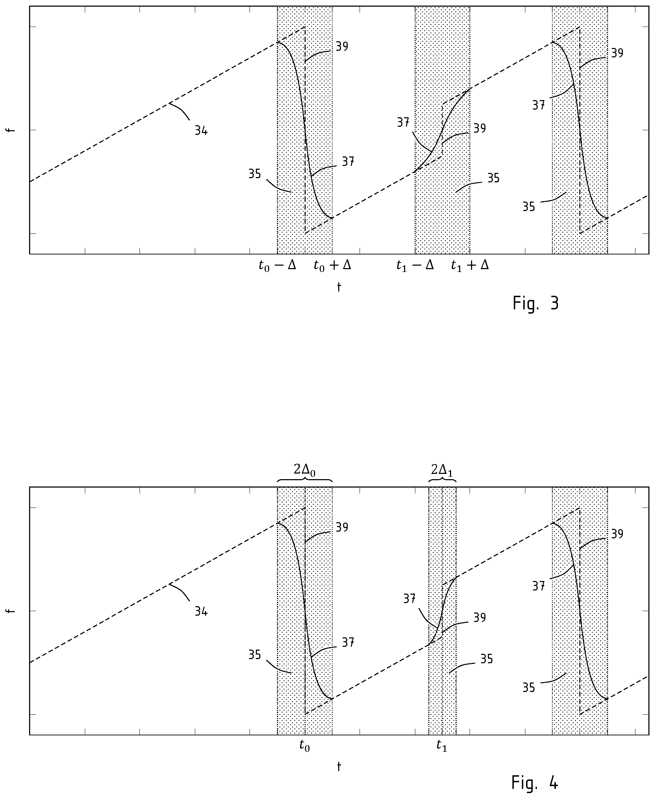

**Figure 3** is a plot of the instantaneous frequency of a hypothetic chirp signal. The frequency plot 34, represented by a dashed line, has continuous sections and discontinuities 39. The plot shows only a short time segment of the signal. The signal may be a modulated LoRa signal, but the invention is not so limited.

As mentioned, the discontinuities 39 translate into unwanted out-of-band emissions and this invention proposes methods to mitigate this shortcoming by smoothing or shaping the frequency profile such that the discontinuities are eliminated or reduced.

Possibly, the chirp profile 34 may be smoothed by linear filters (for example IIR or FIR low-pass filters) in the frequency domain or in the phase domain. These, however, introduce constellation errors-deviations of the modulation values from the ideal position that may manifests in an excessive EVM (Error Vector Magnitude)-and phase shifts. A linear filter applied to the instantaneous frequency or to the phase is a linear operation on the phase, that it is linked to the frequency by a linear transformation (the integral); however, this does not apply to the signal itself because the relationship between phase and signal is non-linear. Accordingly, linear filters applied to the instantaneous frequency or to the instantaneous phase are effective only to an extent, and finding an acceptable compromise between out-of-band (OOB) emissions and error vector magnitude (EVM) is difficult.

According to an aspect of the invention, the original signal is replaced by a modified signal whose instantaneous frequency, represented by the continuous segments 37, is a smoothing of the instantaneous frequency of the initial signal that is continuous, or at least exhibits less severe discontinuities, with smaller frequency jumps.

In the example, the interpolation is performed in interpolation segments 35 that span across the discontinuities 39, by a predetermined half-width $\Delta$. These segments are highlighted by a grey background in the figure. Outside the interpolation segments 35, the instantaneous frequency of the signal is unchanged.

In figure 3, the interpolation is an exponential function that can be written as

$$f(t) = \begin{cases} f_m - f_j \cdot k(t_0 - t) & \text{if } t_0 - \Delta \leq t < t_0 \\ f_m + f_j \cdot k(t - t_0) & \text{if } t_0 \leq t \leq t_0 + \Delta \end{cases}$$

where

$$k(x) = \frac{1 - e^{-\alpha x/\Delta}}{1 - e^{-\alpha}}$$

in which $\Delta$ denotes the half-width of the interpolation segment, $\alpha$ is a coefficient controlling the growth/decay of the exponential, $f_m$ stands for the instantaneous frequency at the inflexion point and $f_j$ is the half-height of the frequency jump.

The inventors have found that the width $\Delta$ of the interpolation segments can be chosen such that the EVM is not degraded beyond acceptable limits in many significant use cases. The coefficient $\alpha$ in the exponential function can be determined to optimize the OOB emissions once a value for $\Delta$ is chosen.

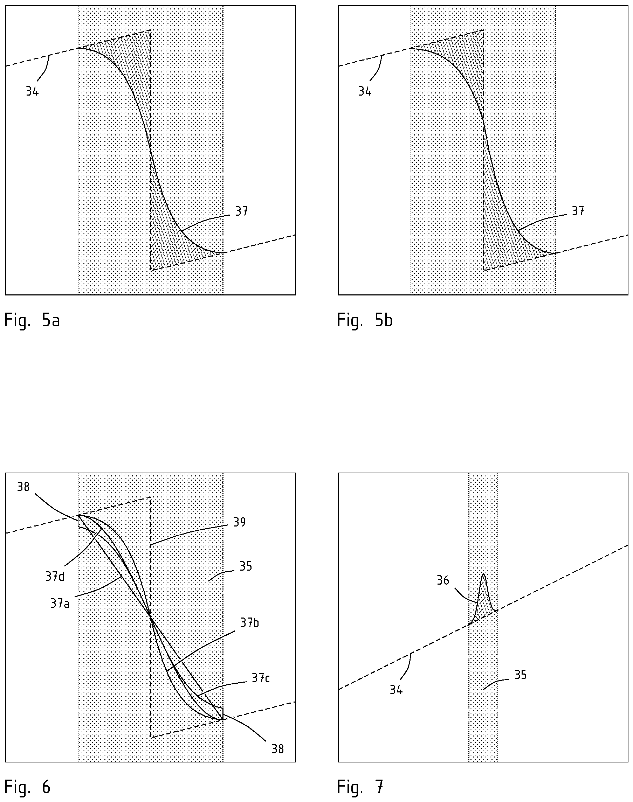

The inventors have found also that this kind of interpolation reduces the OOB emission, and that many interpolating functions are suitable to achieve this goal. For example, the interpolation may be linear, piecewise linear, cubic, polynomial, exponential, a hyperbolic tangent, cosine and so on. The possibilities are too many to be all mentioned. The interpolated signal may be the result of a weighted average between the initial signal and the result of a mathematical interpolations, to provide a smooth transition between parts that copy the original signal and interpolated ones. **Figure 6,** for example, shows a chirp with a frequency step 39 that is interpolated, in an interpolation segment 35, with a linear function 37a, an exponential function 37b as defined by formula above, a cosine function 37d and an hyperbolic tangent function 37c that is chosen such that it does not quite attain the level of the original chirp at the boundary of the interpolation segment 35, such that it displays two small frequency jumps 38 in lieu of the original large jump 39.

Advantageously, the series of chirps that is interpolated in the transmitter yields a radio signal that, while having a cleaner spectrum with lower OOB (out-of-band) emissions than the original, can still be received and understood without changing the demodulating and decoding process. It is compatible with legacy receivers. In the case of LoRa, the signal can be processed in the receiver with the dechirping method disclosed above, without modifications. This disclosure will show that the error introduced by the interpolation can be measured or simulated and expressed as an EVM ratio that is acceptable.

In general, strict continuity of the interpolated instantaneous frequency is not required and, as in the last example of figure 6, the interpolation may be partial, in the sense that one or more small frequency jumps remain, at the boundaries of the interpolation segment as well as inside. This is a manner of reducing the OOB emissions without degrading the constellation error.

Advantageously, the width of the interpolation interval $\Delta$ can be adapted to the characteristics of the signal. An example is shown in **figure 4** where the interpolation segments 35 have different half-widths $\Delta_0$ and $\Delta_1$. The latter is smaller than the former because the corresponding frequency jump is lower. The width of the interpolation segments can be adjusted also based on the chirp slope. Lower slopes correspond to longer symbol times, which means that the EVM will be more robust, and longer interpolation segments will be acceptable. In addition, lower chirp slopes (that is, in LoRa, higher values of the spreading factor parameter and lower data rates) provide better tolerance to noise.

Another advantage of the inventive processing is that it does not introduce unwanted phase shifts. The interpolation functions shown above exhibit a central symmetry and, therefore, the net effect of the interpolation on the signal phase is nil. This can be seen in **figure 5a** where the areas between the original signal and the interpolated one are highlighted. Regions where the interpolation is below the initial signal introduce a phase delay, while when the interpolation is above, the result is a phase advance. Since the two highlighted regions are identical, the net area is zero, and so is the phase shift.

Importantly, this offers a way to control the phase at will, without introducing discontinuities or artifacts in the signal. **Figure 5b** shows an example where the interpolation function is deliberately asymmetric. The area where the interpolated chirp is below the original one is smaller than the other, where the interpolation is above. This result in a net phase advance, whose value can be chosen at will through the shape of the interpolating function.

This fine control on the phase can be exploited by interpolating the chirps also in segments of the signal where the instantaneous frequency is continuous, without jumps. A phase shift can be obtained by placing an interpolation segment 35 on any point-with a discontinuity or not-of the chirp sequence 34 and adding a continuous "bump" 36, whose integral is equal to the desired phase shift, as shown in **figure 7.** This processing can be regarded as introducing an artificial or notional discontinuity, for example by altering the value of the frequency of one or a few samples, and then interpolate the frequency profile to restore continuity, at least in part. As shown already, this achieves the desired phase shift with negligible effect on the EVM and on the OOB spectrum.

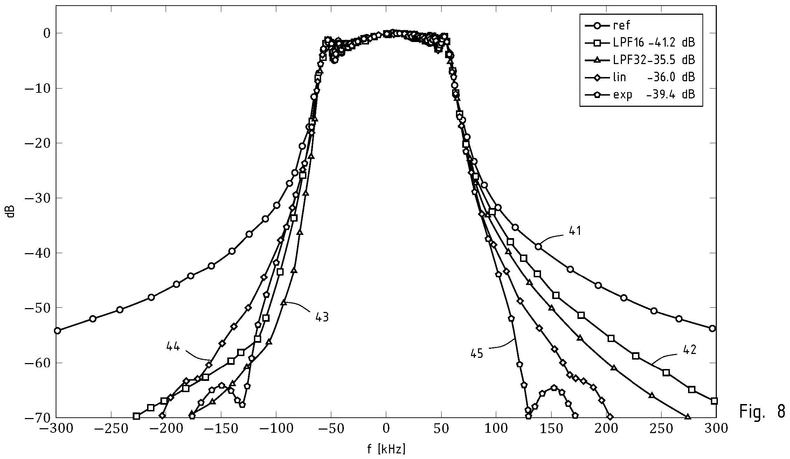

**Figure 8** illustrates the result of a comparative tests between different treatments of a LoRa packet with a spreading factor SF=7 and a nominal bandwidth BW = 125 kHz. The plots show the spectra resulting from different filters and interpolations applied in the frequency domain.

table 1

| ref. | processing | EVM |
|---|---|---|
| 41 | Unfiltered chirp (reference) | |
| 42 | 1st order IIR lowpass with $\alpha$ = 1/16 | -31.2 dB |
| 43 | 1st order IIR lowpass with $\alpha$ = 1/32 | -35.5 dB |
| 37a | Linear interpolation | -36.0 dB |
| 37b | Exponential interpolation | -39.4 dB |

Table 1 indicates the reference numbers used in figure 8, the filtering or interpolation algorithm and the EVM. The interpolations 37a and 37b use the interpolation functions identified by the same references in figure 6. The exponential interpolation has parameters $\Delta$ = 1.5 samples (1 sample = 1/BW) and $\alpha$ = 2.5. The method of the invention yields a EVM comparable with that of lowpass filters or better, with a superior reduction of the OOB emissions and, contrary to other forms of smoothing, does not introduce unwanted phase shifts.

**Reference symbols in the figures**

30   base chirp
32   modulated chirp
34   original frequency profile
35   interpolation segment
36   interpolation with a continuous bump
37   interpolation smoothing a discontinuity
37a   linear interpolation
37b   exponential interpolation
37c   hyperbolic tangent interpolation
37d   cosine interpolation
38   residual discontinuity
39   frequency jump
41   spectrum of the original signal
42   spectrum after LPF smoothing in frequency domain
43   spectrum after LPF smoothing in frequency domain
44   spectrum after linear interpolation in frequency domain
45   spectrum after exponential interpolation in frequency domain
100   RF section
102   RF switch
110   Frequency conversion
120   Power amplifier
129   oscillator, timebase
150   modulator
152   digital signal to transmit
154   buffer
160   LNA
170   down-conversion stage
180   processor, demodulator
182   reconstructed digital signal

190    controlled oscillator
200    baseband section

**Claims**

1.  Method of transmitting digital data comprising:

    - in a transmitter, encoding the data into a series of variable-frequency chirps (34),
    - modulating a carrier on the basis of the series of variable-frequency chirps,
    - transmitting the carrier as radio signal,
    - receiving the radio signal in a receiver,
    - reconstructing the digital data based on the received radio signal, **characterized by:**
    in the transmitter, locating one or more interpolation segments (35) in the series of variable-frequency chirps (34), modify the series of variable-frequency chirps by replacing values of the instantaneous frequency of the series of variable-frequency chirps in each interpolation segment with modified values of the instantaneous frequency, modulating the carrier with the modified series of variable-frequency chirps.

2.  The method of the preceding claim, wherein the modified values result from an interpolation (37) of values of the instantaneous frequency in the interpolation segment, or from the interpolation of a leftmost value and a rightmost value of instantaneous frequency in each interpolation segment.

3.  The method of claim 1, wherein an interpolation segment (35) encloses a discontinuity (39) in the instantaneous frequency of the series of variable-frequency chirps (34).

4.  The method of the preceding claim, the interpolation being such that said discontinuity (39) is eliminated or reduced in height.

5.  The method of any one of the preceding claims, wherein the interpolation is one of: linear interpolation (37a), exponential interpolation (37b), interpolation with a hyperbolic function (3c), interpolation with a cosine function (37d).

6.  The method of any one of the preceding claims, wherein the interpolation segments have a common predetermined width ($\Delta$).

7.  The method of any one of the preceding claims, comprising a step of adapting the width ($\Delta_0$, $\Delta_1$) of one or more interpolation segments based on a discontinuity height and/or on a chirp slope.

8.  The method of any one of the preceding claims, wherein the interpolation introduces a desired phase shift, which can be zero.

9.  Digital radio transmitter configured for encoding digital data into a series of variable-frequency chirps (34), modulating a carrier on the basis of the series of variable-frequency chirps, transmitting the carrier as radio signal, **characterized by** being configured to locate one or more interpolation segments (35) in the series of variable-frequency chirps (34) and modify the series of variable-frequency chirps by replacing values of the instantaneous frequency of the series of variable-frequency chirps in each interpolation segment with modified values of the instantaneous frequency .

10. The transmitter of the preceding claim, wherein the modified values result from an interpolation (37) of values of the instantaneous frequency in the interpolation segment, or from the interpolation of a leftmost value and a rightmost value of instantaneous frequency in each interpolation segment.

11. The digital radio transmitter of the preceding claim, wherein an interpolation segment encloses a discontinuity (39) in a profile of the instantaneous frequency of the series of variable-frequency chirps (34), the interpolation being such that said discontinuities (39) are eliminated or reduced in height.

12. The digital radio transmitter of any one of claims 9-11, wherein the interpolation is one of: linear interpolation (37a), exponential interpolation (37b), interpolation with a hyperbolic function (37c), cosine function (37d).

13. The digital radio transmitter of any one of claims 9-12, wherein the interpolation segments (35) have a common predetermined width ($\Delta$).

**14.** The digital radio transmitter of any one of claims 9-13, comprising a step of adapting the width ($\Delta_0$, $\Delta_1$) of one or more interpolation segments based on a discontinuity height and/or on a chirp slope.

**15.** The digital radio transmitter of any one of claims 9-14, wherein the interpolation (37) introduces a desired phase shift, which can be zero.

Fig. 1

PRIOR ART

Fig. 2a

PRIOR ART

Fig. 2b

PRIOR ART

Fig. 2c

PRIOR ART

Fig. 3

Fig. 4

Fig. 5a

Fig. 5b

Fig. 6

Fig. 7

Fig. 8

Europäisches
Patentamt

European
Patent Office

Office européen
des brevets

# EUROPEAN SEARCH REPORT

**Application Number**

EP 24 21 7262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/111750 A1 (NGUYEN TUNG TRONG [CA] ET AL) 15 April 2021 (2021-04-15) | 1-3, 5-10, 12-15 | INV.<br>H04B1/69<br>H04B1/717 |
| A | * the whole document * | 4,11 | H03B23/00 |
| | ----- | | |
| X | CN 109 861 718 A (BEIJING SMARTCHIP MICROELECTRONICS TECH CO LTD ET AL.) 7 June 2019 (2019-06-07) | 1-3, 5-10, 12-15 | ADD.<br>H04B1/7163 |
| A | * the whole document * | 4,11 | |
| | ----- | | |
| A | US 4 470 025 A (BAKER LEWIN T [US]) 4 September 1984 (1984-09-04) * the whole document * | 1-15 | |
| | ----- | | |

**TECHNICAL FIELDS SEARCHED (IPC)**

H04B
H03B
H03D
H03C
G01S

The present search report has been drawn up for all claims

| Place of search | Date of completion of the search | Examiner |
|---|---|---|
| Munich | 16 April 2025 | Gardella, Simone |

EPO FORM 1503 03.82 (P04C01)

## ANNEX TO THE EUROPEAN SEARCH REPORT
## ON EUROPEAN PATENT APPLICATION NO.

EP 24 21 7262

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | Publication date | Patent family member(s) | Publication date |
|---|---|---|---|
| US 2021111750 A1 | 15-04-2021 | US 2019356351 A1<br>US 2021111750 A1 | 21-11-2019<br>15-04-2021 |
| CN 109861718 A | 07-06-2019 | NONE | |
| US 4470025 A | 04-09-1984 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2449690 B1
- EP 2763321 B1
- EP 2767847 B1
- EP 3247046 B1
- EP 2449690 A